# EUROPEAN PATENT SPECIFICATION

(11) **EP 4 057 437 B1**
(45) Date of publication and mention of the grant of the patent: **18.06.2025**
(21) Application number: 21846317.2
(22) Date of filing: 19.07.2021
(51) Int. Cl.: H01M 50/502, H01M 50/20, H01R 25/16

(54) **BATTERY MODULE HAVING IMPROVED ELECTRODE LEAD CONNECTION STRUCTURE, AND BATTERY PACK AND VEHICLE INCLUDING SAME**
BATTERIEMODUL, DAS EINE VERBESSERTE ELEKTRODENLEITUNGSVERBINDUNGSSTRUKTUR AUFWEIST, UND BATTERIEPAKET UND FAHRZEUG DAMIT
MODULE DE BATTERIE COMPORTANT UNE STRUCTURE DE CONNEXION DE FIL D'ÉLECTRODE AMÉLIORÉE ET BLOC-BATTERIE AINSI QUE VÉHICULE LE COMPRENANT

(30) Priority: 21.07.2020 KR 20200090580
(43) Date of publication of application: 14.09.2022
(73) Proprietor: LG Energy Solution, Ltd., Seoul 07335 (KR)
(72) Inventor: PARK, Jun-Hee, Daejeon 34122 (KR)
(74) Representative: Hoffmann Eitle
(86) International application number: PCT/KR2021/009286
(87) International publication number: WO 2022/019596

(56) References cited:
- EP-A1- 3 062 365
- EP-A1- 3 331 059
- EP-A1- 3 671 902
- JP-A- 2014 192 052
- KR-A- 20190 071 454
- KR-A- 20190 105 856
- KR-B1- 102 034 208
- US-A1- 2016 233 476

## Description

### TECHNICAL FIELD

The present disclosure relates to a battery module including an improved electrode lead connection structure, and a battery pack and a vehicle including the battery module, and more particularly, to a battery module including a structure capable of stably and easily making electrical connection between electrode leads without welding between a bus bar and an electrode lead and/or without welding between electrode leads, and a battery pack and a vehicle including the battery module.

### BACKGROUND ART

A bus bar frame 2 including a bus 3 is generally used to electrically connect a plurality of pouch-type battery cells constituting a cell stack. In this case, an electrode lead 1 of each of adjacent pouch-type battery cells passes through a lead slit 2a formed in the bus bar frame 2, and a pair of electrode leads 1 passing through the lead slits 2a are welded to the bus bar 3 formed of a conductive material and fixed to the bus bar frame 2. Accordingly, the adjacent battery cells are electrically connected to each other.

A plurality of bus bars 3 may be provided on the bus bar frame 2, and a pair of electrode leads 1 may be coupled to each of the bus bars 3. According to an electrical connection type, three or more electrode leads 1 may be coupled to one bus bar 3.

As such, according to a conventional battery module structure for electrically connecting battery cells by using the bus bar 3 formed of a conductive material, a structure capable of fixing the bus 3 should be provided on the bus bar frame 2. Also, according to the conventional battery module structure, an additional process of welding the electrode lead 1 to the bus bar 3 is required.

Accordingly, it is necessary to reduce costs by omitting the bus bar 3 formed of an expensive metal material and directly connecting the electrode leads 1 to each other. Also, it is necessary to pursue equipment investment reduction through omission of welding equipment by making stable electrical connection even when welding is not used in direct connection between the electrode leads 1.

EP 3062365 A1 relates to a battery pack, including a battery cell including an electrode tab, a cell holder through which the electrode tab is inserted, and a connection tab including a first connection tab portion and a second connection tab portion facing each other and coupled to the electrode tab with the electrode tab being therebetween.

### DISCLOSURE

### Technical Problem

The present disclosure is designed to solve the problems of the related art, and therefore the present disclosure is directed to reducing costs by omitting a bus bar formed of a metal material and directly connecting electrode leads to each other, in electrical connection between battery cells.

The present disclosure is also directed to achieving equipment investment reduction through omission of welding equipment by applying a battery module structure capable of making stable electrical connection even without applying welding, in direct connection between electrode leads.

However, technical problems to be solved by the present disclosure are not limited to the above-described technical problems and one of ordinary skill in the art will understand other technical problems from the following description.

### Technical Solution

A battery module according to an embodiment of the present disclosure includes: a cell stack including a plurality of battery cells each including a pair of electrode leads; a fastening bar frame including a pair of lead slits through which electrode leads of adjacent battery cells are drawn out; and a fastening bar including an insertion slit through which a pair of electrode leads passing through the pair of adjacent lead slits pass, the fastening bar being coupled to the fastening bar frame.

The fastening bar may be coupled to the fastening bar frame in a state where the pair of electrode leads passing through the insertion slit are wound.

A lead assembly including the pair of electrode leads may be in close contact with the fastening bar frame by winding using the fastening bar.

The fastening bar frame may include a pair of first fixed portions provided on both sides in a width direction, and the fastening bar may include second fixed portions provided on both end portions in a longitudinal direction and respectively coupled to the pair of first fixed portions.

The pair of first fixed portions may be respectively located on both sides in an extending direction of the pair of lead slits.

The pair of second fixed portions may be respectively located on both sides in an extending direction of the insertion slit.

Each of the pair of first fixed portions may include a first fastening hole, and each of the pair of second fixed portions may include a second fastening hole formed to have a shape and a position corresponding to the first fastening hole.

The fastening bar may be fixed to the fastening bar frame by a fixing member passing through both the first fastening hole and the second fastening hole.

The fixing member may be a bolt.

Each of the pair of first fixed portions may include a first fastening hole, and each of the pair of second fixed portions may include a snap-fit protrusion formed to have a position and a shape corresponding to the first fastening hole.

A battery pack according to an embodiment of the present disclosure includes the battery module according to an embodiment of the present disclosure.

A vehicle according to an embodiment of the present disclosure includes the battery module according to an embodiment of the present disclosure.

### Advantageous Effects

According to an aspect of the present disclosure, a bus bar formed of a metal material may be omitted and electrode leads may be directly connected to each other, in electrical connection between battery cells, thereby reducing manufacturing costs of a battery module.

Also, according to another aspect of the present disclosure, equipment investment reduction may be achieved through omission of welding equipment by applying a battery module structure capable of making stable electrical connection even without applying welding, in direct connection between electrode leads.

According to another aspect of the present disclosure, because welding is not used to electrically connect electrode leads, when abnormality occurs in some battery cells, the battery cells may be simply replaced by separating a fastening bar from a fastening bar frame.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

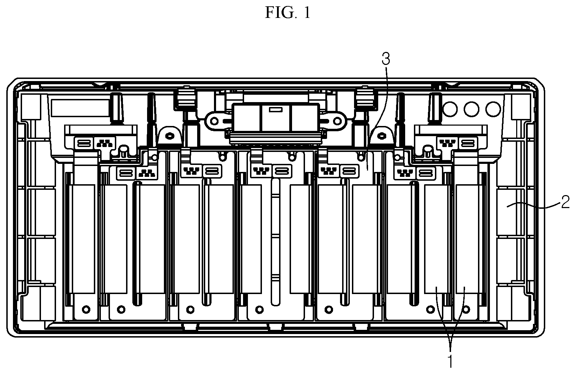

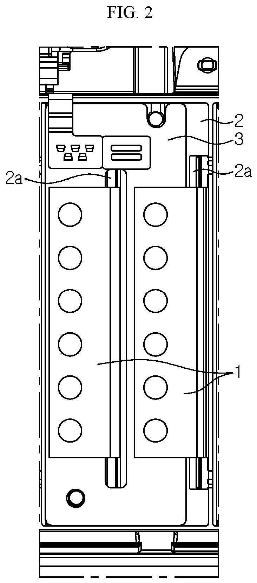

FIGS. 1 and 2 are views illustrating a conventional battery module structure.
FIG. 3 is a view illustrating a battery module according to an embodiment of the present disclosure.
FIG. 4 is a view illustrating a cell stack of the present disclosure.
FIG. 5 is a view illustrating a fastening bar frame of the present disclosure.
FIG. 6 is a view illustrating a state where the cell stack and the fastening bar frame of the present disclosure are coupled.
FIG. 7 is a view illustrating a fastening bar according to an embodiment of the present disclosure.
FIG. 8 is a view illustrating a state before a pair of electrode leads passing through a lead insertion slit are wound by using a fastening bar of the present disclosure.
FIG. 9 is a view illustrating a state after the pair of electrode leads passing through the lead insertion slit are wound by using the fastening bar of the present disclosure.
FIG. 10 is a view illustrating a coupling structure between the fastening bar and the fastening frame, particularly illustrating a fastening structure according to another embodiment of the present disclosure.

### BEST MODE

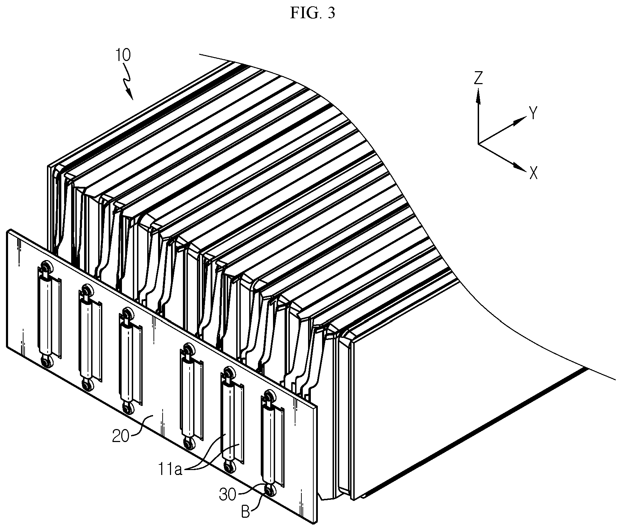

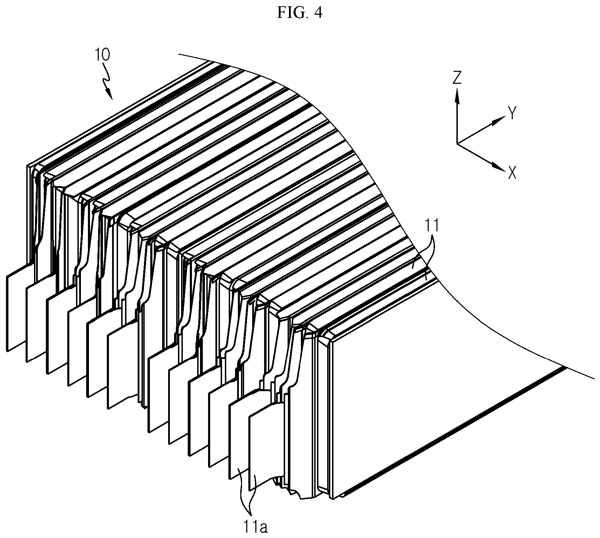

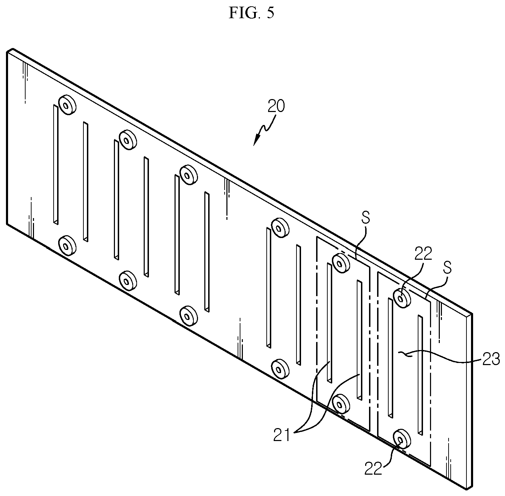

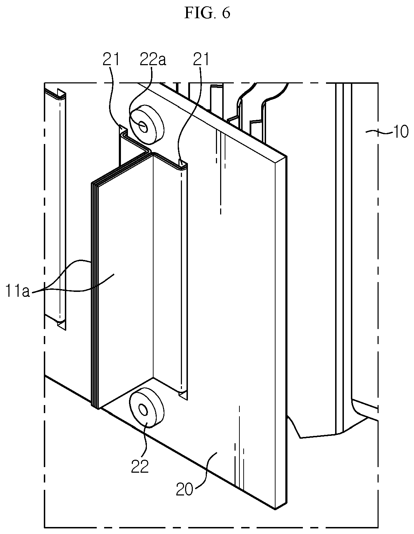

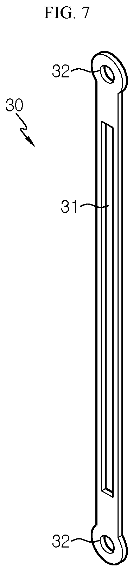

Referring to FIGS. 3 through 9, a battery module according to an embodiment of the present disclosure includes a cell stack 10, a fastening bar frame 20, and a fastening bar 30.

The cell stack 10 includes a plurality of battery cells 11 each including a pair of electrode leads 11a. The battery cell 11 may be, for example, a pouch-type battery cell, and in this case, a pair of electrode leads 11a having different polarities are drawn out in opposite directions. The plurality of battery cells 11 constituting the cell stack 10 are stacked so that a first electrode lead 11a provided in a first battery cell 11 and a second electrode lead 11a provided in a second battery cell 11 adjacent to the first battery cell 11 and drawn out in the same direction as the first electrode lead 11a of the first battery cell 11 have different polarities.

Such a stacked arrangement of the cell stack 10 is to connect the plurality of battery cells 11 in series. That is, the first electrode lead 11a and the second electrode lead 11a having different polarities are electrically connected to each other, so that adjacent battery cells 11 are connected in series.

The fastening bar frame 20 has a substantially rectangular plate shape, and is located on one side and the other side in a longitudinal direction (direction parallel to a Y-axis) of the cell stack 10. It is preferable that the fastening bar frame 20 is formed of a non-conductive material. A pair of fastening bar frames 20 are provided to connect the plurality of battery cells 11 constituting the cell stack 10 in series.

The fastening bar frame 20 includes at least one lead connection area S, and when a plurality of lead connection areas S are provided, the plurality of lead connection areas S are spaced apart from one another in a longitudinal direction (direction parallel to an X-axis) of the fastening bar frame 20.

Each of the lead connection areas S includes a pair of lead slits 21 and a pair of first fixed portions 22. The pair of lead slits 21 extend in a width direction (direction parallel to a Z-axis) of the fastening bar frame 20, and are spaced apart from each other in the longitudinal direction (direction parallel to the X-axis) of the fastening bar frame 20.

The electrode lead 11a passes through the lead slit 21. The first electrode lead 11a of the first battery cell 11 is drawn out through any one of the pair of lead slits 21, and the second electrode lead 11a of the second battery cell 11 is drawn out through the remaining one lead slit 21. The first electrode lead 11a and the second electrode lead 11a have different polarities, and are in close contact with each other by the fastening bar 30 described below, to connect adjacent first battery cell 11 and second battery cell 11 in series.

The pair of first fixed portions 22 may be provided on both sides in the width direction (direction parallel to the Z-axis) of the fastening bar frame 20, and may protrude from a surface of the fastening bar frame 20. The pair of first fixed portions 22 are respectively located on both sides in an extending direction of the lead slits 21. The first fixed portion 22 may have a first fastening hole 22a.

The fastening bar 30 includes an insertion slit 31 extending in a longitudinal direction (direction parallel to the Z-axis) and a pair of second fixed portions 32 respectively located on both sides in an extending direction of the insertion slit 31. The fastening bar 30 is fastened to the fastening bar frame 20 in a state where the pair of electrode leads 11a passing through the insertion slit 31 are wound.

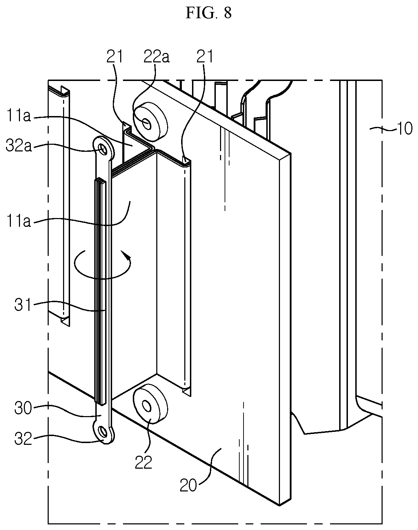

In detail, in a state where the pair of electrode leads 11a respectively passing through the pair of adjacent lead slits 21 pass through the insertion slit 31 at once, the fastening bar 30 rotates in a direction marked by an arrow in FIG. 8 or in the opposite direction about a central axis parallel to the longitudinal direction (direction parallel to the Z-axis) to wind the pair of electrode leads 11a. This winding process is performed until a lead assembly including the pair of electrode leads 11a is in close contact with the fastening bar frame 20. Because the fastening bar 30 is fastened to the fastening bar frame 20 in a state where the lead assembly is pressed onto the fastening bar frame 20, the pair of electrode leads 11a may be in close contact with each other, thereby maintaining a stable electrical connection state. That is, because the fastening bar 30 enables the pair of electrode leads 11a to be in close contact with each other by using a winding method, stable electrical connection between the pair of electrode leads 11a may be made even without welding.

The pair of second fixed portions 32 are respectively provided on both end portions in the longitudinal direction of the fastening bar 30 (direction parallel to the Z-axis), and each second fixed portion 32 is coupled to the first fixed portion 22. The second fixed portion 32 may have a second fastening hole 32a formed to have a position and a shape corresponding to the first fastening hole 22a. In this case, the fastening bar 30 may be fixed to the fastening bar frame 20 by a fixing member B passing through both the first fastening hole 22a and the second fastening hole 32a. The fixing member B may be a bolt.

As described above, the fastening bar 30 may be a tool for performing winding to make the pair of electrode leads 11a constituting the lead assembly in close contact with each other, and does not function as an electrical medium for electrically connecting the electrode leads 11a. Accordingly, the fastening bar 30 may be formed of a non-conductive material.

A method of fastening the fastening bar 30 to the fastening bar frame 20 of the present disclosure may be different from a method of inserting the fixing member B into the first and second fastening holes 22a and 32a described above.

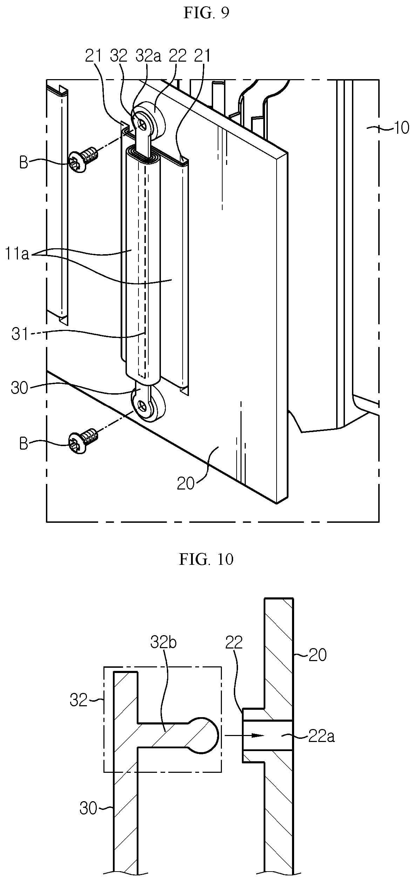

Referring to FIG. 10, the first fastening hole 22a may be formed in the first fixed portion 22 of the fastening bar frame 20 as in the above embodiment, and a snap-fit protrusion 32b may be provided on the second fixed portion 32 of the fastening bar 30 unlike in the above embodiment.

The snap-fit protrusion 32b is formed to have a position and a size corresponding to the first fastening hole 22a. In order for the snap first protrusion 32 to be inserted into the first fastening hole 22a and naturally fixed, a cross-sectional area of an end portion in an extending direction is greater than a cross-sectional area of the remaining portion. Accordingly, the snap-fit protrusion 32b is inserted into the first fastening hole 22a by using an interference-fitting method, and then is fixed to the fastening bar frame 20 due to the shape of the end portion having a large cross-sectional area.

According to the battery module according to an embodiment of the present disclosure as described above, electrical connection between the plurality of battery cells 11 may be made without welding, and a component such as a bus bar formed of a conductive material may be omitted. That is, electrical connection between the battery cells 11 may be made simply by using a process of winding the pair of electrode leads 11 by using the fastening bar 30 and fixing the fastening bar 30 to the fastening bar frame 20 in a state where the winding is tightly maintained.

A battery pack according to an embodiment of the present disclosure includes at least one battery module according to the present disclosure. Also, a vehicle according to an embodiment of the present disclosure includes at least one battery module according to the present disclosure or at least one battery pack according to an embodiment of the present disclosure.

The present disclosure has been described in detail. However, it should be understood that the detailed description and specific examples, while indicating preferred embodiments of the present disclosure, are given by way of illustration only, since various changes and modifications within the scope of the present disclosure defined by the appended claims will become apparent to one of ordinary skill in the art from this detailed description.

## Claims

1. A battery module comprising: a cell stack (10) comprising a plurality of battery cells (11) each comprising a pair of electrode leads; (11a) 5 a fastening bar frame (20) comprising a pair of lead slits through which electrode leads of adjacent battery cells are drawn out; and **characterised in that**,
a fastening bar (30) comprising an insertion slit through which a pair of electrode leads passing through the pair of adjacent lead slits pass, the fastening bar being coupled to the fastening bar frame.

2. The battery module of claim 1, wherein
the fastening bar is coupled to the fastening bar frame in a state where the pair of electrode leads passing through the insertion slit are wound.

3. The battery module of claim 2, wherein
a lead assembly comprising the pair of electrode leads is in close contact with the fastening bar frame by winding using the fastening bar.

4. The battery module of claim 1, wherein
the fastening bar frame comprises a pair of first fixed portions provided on both sides in a width direction of the fastening bar frame, and
the fastening bar comprises second fixed portions provided on both end portions in a longitudinal direction of the fastening bar and respectively coupled to the pair of first fixed portions.

5. The battery module of claim 4, wherein
the pair of first fixed portions are respectively located on both sides in an extending direction of the pair of lead slits.

6. The battery module of claim 4, wherein
the pair of second fixed portions are respectively located on both sides in an extending direction of the insertion slit.

7. The battery module of claim 4, wherein
each of the pair of first fixed portions comprises a first fastening hole, and each of the pair of second fixed portions comprises a second fastening hole formed to have a shape and a position corresponding to the first fastening hole.

8. The battery module of claim 7, wherein
the fastening bar is fixed to the fastening bar frame by a fixing member passing through both the first fastening hole and the second fastening hole.

9. The battery module of claim 8, wherein
the fixing member is a bolt.

10. The battery module of claim 4, wherein
each of the pair of first fixed portions comprises a first fastening hole, and each of the pair of second fixed portions comprises a snap-fit protrusion formed to have a position and a shape corresponding to the first fastening hole.

11. A battery pack comprising the battery module according to any one of claims 1 through 10.

12. A vehicle comprising the battery module according to any one of claims 1 through 10.

## Patentansprüche

1. Batteriemodul, umfassend: einen Zellenstapel (10), umfassend eine Vielzahl von Batteriezellen (11), jeweils umfassend ein Paar Elektrodenanschlüsse; (11a)
einen Befestigungsleistenrahmen (20), umfassend ein Paar Leitungsschlitze, durch die Elektrodenleitungen benachbarter Batteriezellen herausgezogen werden; und **dadurch gekennzeichnet, dass**
eine Befestigungsleiste (30), umfassend einen Einführschlitz, durch den ein Paar Elektrodenleitungen hindurchgeführt ist, die durch das Paar benachbarter Leitungsschlitze hindurchgeführt sind, wobei die Befestigungsleiste mit dem Befestigungsleistenrahmen gekoppelt ist.

2. Batteriemodul nach Anspruch 1, wobei
die Befestigungsleiste mit dem Befestigungsleistenrahmen in einem Zustand gekoppelt ist, in dem das Paar Elektrodenleitungen, die durch den Einführschlitz hindurchgeführt sind, gewickelt sind.

3. Batteriemodul nach Anspruch 2, wobei
eine Leitungsanordnung, die das Paar Elektrodenleitungen umfasst, durch Wickeln unter Verwendung der Befestigungsleiste in engem Kontakt mit dem Befestigungsleistenrahmen steht.

4. Batteriemodul nach Anspruch 1, wobei
der Befestigungsleistenrahmen ein Paar erster fester Abschnitte umfasst, die auf beiden Seiten in einer Breitenrichtung des Befestigungsleistenrahmens bereitgestellt sind, und
die Befestigungsleiste zweite feste Abschnitte umfasst, die an beiden Endabschnitten in Längsrichtung der Befestigungsleiste bereitgestellt sind und jeweils mit dem Paar erster fester Abschnitte gekoppelt sind.

5. Batteriemodul nach Anspruch 4, wobei
das Paar erster fester Abschnitte jeweils auf beiden Seiten in einer Verlängerungsrichtung des Paares von Leitungsschlitzen angeordnet ist.

6. Batteriemodul nach Anspruch 4, wobei
das Paar zweiter fester Abschnitte jeweils auf beiden Seiten in einer Verlängerungsrichtung des Einführschlitzes angeordnet ist.

7. Batteriemodul nach Anspruch 4, wobei
jedes des Paares der ersten festen Abschnitte ein erstes Befestigungsloch umfasst und jedes des Paares der beiden zweiten festen Abschnitte ein zweites Befestigungsloch umfasst, das so gebildet ist, dass es eine Form und eine Position aufweist, die dem ersten Befestigungsloch entsprechen.

8. Batteriemodul nach Anspruch 7, wobei
die Befestigungsleiste an dem Befestigungsleistenrahmen durch ein Fixierelement befestigt ist, das sowohl durch das erste Befestigungsloch als auch durch das zweite Befestigungsloch hindurchgeführt ist.

9. Batteriemodul nach Anspruch 8, wobei
das Fixierelement eine Schraube ist.

10. Batteriemodul nach Anspruch 4, wobei
jedes des Paares der ersten festen Abschnitte ein erstes Befestigungsloch umfasst und jedes des Paares der zweiten festen Abschnitte einen Schnappverschlussvorsprung umfasst, der so gebildet ist, dass er eine Position und eine Form aufweist, die dem ersten Befestigungsloch entsprechen.

11. Batteriepack, umfassend das Batteriemodul nach einem der Ansprüche 1 bis 10.

12. Fahrzeug, umfassend das Batteriemodul nach einem der Ansprüche 1 bis 10.

## Revendications

1. Module de batterie comprenant : une stratification (10) d'éléments comprenant une pluralité d'éléments (11) de batterie comprenant chacun une paire de fils (11a) d'électrode ;
un cadre (20) de barre de fixation comprenant une paire de fentes de retrait à travers lesquelles les fils d'électrode d'éléments de batterie adjacents sont tirés ; et **caractérisé en ce que**,
une barre (30) de fixation comprenant une fente d'insertion à travers laquelle une paire de fils d'électrode passant à travers la paire de fentes de retrait adjacentes passe, la barre de fixation étant couplée au cadre de barre de fixation.

2. Module de batterie selon la revendication 1, dans lequel
la barre de fixation est couplée au cadre de barre de fixation dans un état où la paire de fils d'électrodes passant à travers la fente d'insertion est enroulée.

3. Module de batterie selon la revendication 2, dans lequel
un ensemble de fils comprenant la paire de fils d'électrodes est en contact étroit avec le cadre de barre de fixation par enroulement à l'aide de la barre de fixation.

4. Module de batterie selon la revendication 1, dans lequel
le cadre de barre de fixation comprend une paire de premières parties fixes prévues des deux côtés dans une direction de largeur du cadre de barre de fixation, et
la barre de fixation comprend de secondes parties fixes prévues sur les deux parties d'extrémité dans une direction longitudinale de la barre de fixation et respectivement couplées à la paire de premières parties fixes.

5. Module de batterie selon la revendication 4, dans lequel
la paire de premières parties fixes est respectivement située des deux côtés dans une direction d'extension de la paire de fentes de retrait.

6. Module de batterie selon la revendication 4, dans lequel
la paire de secondes parties fixes est respectivement située des deux côtés dans une direction d'extension de la fente d'insertion.

7. Module de batterie selon la revendication 4, dans lequel
chacune de la paire de premières parties fixes comprend un premier trou de fixation, et chacune de la paire de secondes parties fixes comprend un second trou de fixation formé pour avoir une forme et une position correspondant au premier trou de fixation.

8. Module de batterie selon la revendication 7, dans lequel
la barre de fixation est fixée au cadre de barre de fixation par un organe de fixation passant à la fois à travers le premier trou de fixation et le second trou de fixation.

9. Module de batterie selon la revendication 8, dans lequel
l'organe de fixation est un boulon.

10. Module de batterie selon la revendication 4, dans lequel
chacune de la paire de premières parties fixes comprend un premier trou de fixation, et chacune de la paire de secondes parties fixes comprend une saillie à encliquetage formée pour avoir une position et une forme correspondant au premier trou de fixation.

11. Bloc-batterie comprenant le module de batterie selon l'une quelconque des revendications 1 à 10.

12. Véhicule comprenant le module de batterie selon l'une quelconque des revendications 1 à 10.
